# EUROPEAN PATENT SPECIFICATION

(11) **EP 3 023 773 B1**
(45) Date of publication and mention of the grant of the patent: **11.10.2017**
(21) Application number: 14826642.2
(22) Date of filing: 16.07.2014
(51) Int. Cl.: G01N 21/90, G01N 21/84

(54) **CONTAINER INSPECTION DEVICE**
BEHÄLTERINSPEKTIONSVORRICHTUNG
DISPOSITIF D'INSPECTION DE RÉCIPIENT

(30) Priority: 17.07.2013 JP 2013148602; 10.10.2013 JP 2013212970; 16.04.2014 JP 2014084977
(43) Date of publication of application: 25.05.2016
(73) Proprietor: Kirin Techno-System Company, Limited, Kawasaki-shi, Kanagawa 210-0858 (JP)
(72) Inventor: HORIUCHI, Kazuhiro, Kawasaki-shi Kanagawa 210-0858 (JP); TOTSUKA, Hiroyuki, Kawasaki-shi Kanagawa 210-0858 (JP)
(74) Representative: Hoffmann Eitle
(86) International application number: PCT/JP2014/068942
(87) International publication number: WO 2015/008800

(56) References cited:
- JP-A- 2000 055 812
- JP-A- 2001 289 790
- JP-A- 2001 311 696
- JP-A- 2006 003 322
- JP-A- 2006 003 322
- JP-A- 2008 249 569
- JP-A- 2010 155 700
- JP-A- 2014 122 815
- JP-U- H01 146 150
- US-A- 4 786 801

## Description

### TECHNICAL FIELD

The present invention relates to an inspection device which inspects at least an opening portion of a container.

### BACKGROUND ART

As an inspection device which inspects an opening portion of a container, there are known the following inspection devices: an inspection device (for example, JP-A-2001-289790) where, while rotating along with holding the opening portion of the container, an illumination unit provided below the container delivers inspection light from an outside of the container, and whereby the opening portion of the container is illuminated from an inner side of the opening portion for the inspection; and another inspection device (for example, JP-AH10-157798) where, while rotating along with holding a bottom portion of a bottle, an illumination unit inserted into a neck portion of the bottle delivers inspection light from an inside of the bottle so that the neck portion is illuminated from the inner side thereof for the inspection.

US 4,786,801 relates to an apparatus for inspecting the sealing surface of a container for dips, saddles and lean where a beam of light is projected through a finish portion of that container. JP 2006/003322 relates to a lighting device which is reported to be capable of emitting light cylindrically.

### SUMMARY OF INVENTION

### Technical Problem

In a case where the opening portion of the container is inspected with the inspection light delivered from the outside of the container while being rotated along with being held, the inspection light could be inflected when going through the container or a shadow could occur. Due to this, there is a possibility that it is impossible to deliver inspection light suitable for the inspection. On the other hand, in a case where the opening portion of the container is inspected by inserting the illumination unit into the opening portion while rotating the container held, it is necessary to provide devices to both positions: above the container; and below the container. Due to this, the configuration of the inspection device, especially the configuration of the container's surrounding is likely to be upsized.

Then, the present invention aims to provide an inspection device for a container, where the inner side of an opening portion is illuminated with inspection light suitable for inspection, while downsizing the configuration of the device. Solution to Problem

An inspection device of the present invention is an inspection device having the features of claim 1.

According to the inspection device for a container of the present invention, the holding unit which holds the upper end of the opening portion of the container is provided, and the illumination unit illuminates the inside of the protruding portion which is a part of the holding unit, whereby the inspection light is delivered from the inside of the opening portion. Thereby, it is possible to collect the holding unit and the illumination unit above the container, and also it is possible to deliver equable inspection light to the opening portion. Accordingly, it is possible to, while the configuration of the device, especially the configuration of the container's surrounding is downsized, deliver the inspection light suitable for the inspection to the inner side of the opening portion of the container. That is, it is possible to realize both of downsizing of the device and improvement of inspection accuracy. Further, it is possible to collect above the container, not only the holding unit and the illumination unit but also the supporting unit and the rotary-drive unit. Accordingly, it is possible to downsize the configuration of the inspection device which inspects the opening portions while rotating the container, especially the configuration of the container's surrounding, and also possible to deliver the inspection light suitable for the inspection to the inner side of the opening portion of the container. Morover, in a case where electric power is supplied to the emission portion through the cable, it is possible to prevent the cable from being twisted around the rotary shaft of the holding unit.

As one embodiment of the inspection device of the present invention, the inspection device may further comprise: a conveyance unit which is placed above a position where the container is held by the holding unit, and conveys the holding unit along a predetermined conveyance route; wherein the imaging unit images the opening portion in a case where the holding unit is at an inspection position on the conveyance route. According to this embodiment, it is possible to collect above the container, not only the holding unit and the illumination unit but also the conveyance unit. Accordingly, it is possible to downsize the configuration of the inspection device which inspects the opening portions while conveying the container, especially the configuration of the container's surrounding, and also possible to deliver the inspection light suitable for the inspection to the inner side of the opening portion of the container.

In this embodiment, the inspection device may further comprise an illumination control unit which is configured to execute a switching control to switch between turning-on and turning-off of the emission portion depending on a position of the imaging unit and a position of the holding unit on the conveyance route. According to this, for example, the emission portion could be controlled so as to be turned on when the turning-on is necessary for imaging the opening portion, and be turned off in other cases. Thereby, it is possible to suppress electricity consumption of the emission portion, and possible to suppress affection caused by the lighting of the emission portion on other inspections such as a neck portion inspection of a container and a body portion inspection of a container.

In the embodiment where the imaging unit is provided, the holding unit may have a reflection region where the inspection light traveling in a direction diverging from a direction toward the imaging unit is reflected and the inspection light reflected travels toward the imaging device, and a surface finishing for absorbing the inspection light may be applied on at least a part of the reflection region. By applying the surface finishing, it is possible to absorb the reflection light reflected in the reflection region of the holding unit and possible to prevent incidence of the reflection light to the imaging unit. Accordingly, by reducing the reflection light of the inspection light in the reflection region, it is possible to suppress negative affections on the imaging unit. It is possible to prevent deterioration of the inspection accuracy. Further, the reflection region may include a holding surface which holds the upper end portion of the opening portion.

In one embodiment as the inspection device of the present invention, the illumination unit may comprise: a light source; and a leading light unit including a leading light portion and the emission portion, the leading light portion leading light from the light source to the emission portion, and the emission portion may illuminate the inside of the protruding portion using light having passed though the leading light portion. According to this embodiment, it is possible to, while the configuration of the device is downsized, deliver the inspection light suitable for the inspection to the inner side of the opening portion of the container. That is, it is possible to realize both of downsizing of the device and improvement of inspection accuracy. Further, in the embodiment where the conveyance unit is provided, the illumination unit may comprise: a light source placed in a fixed manner above the conveyance unit; and a leading light unit including a leading light portion and the emission portion, the leading light portion leading light from the light source to the emission portion, and the emission portion may illuminate the inside of the protruding portion using light having passed though the leading light portion. The light source is placed so as to be separated from the holding unit. Accordingly, an objection to be conveyed can be downsized. Therefore, it is possible to downsize the configuration of the container's surrounding.

In the embodiment where the leading light unit is provided, the leading light unit may be configured by a rod-shaped optical member, an end portion being located on a side of the protruding portion of the optical member may function as the emission portion, and a remaining portion of the optical member except the end portion may function as the leading light portion. Further, in this embodiment, the optical member may be composed of acrylic resin.

In this embodiment, the supporting unit may be connected with a suction unit which suctions air, and the suction portion may suction air in the container through a hole portion provided to the protruding portion whereby the holding unit holds the container. Thereby, it is possible to simplify the configuration of the holding unit. In this embodiment, an air passage may be provided between the holding unit and the illumination unit, and the air in the container may be suctioned through the air passage. Thereby, since the clearance between the holding unit and the illumination unit can be employed as the suction route, it is possible to simplify the configuration of the device.

In one embodiment as the inspection device of the present invention, the illumination unit may be provided with a reflection member which reflects light emitted from the emission portion. According to this embodiment, it is possible to increase the inspection light by reflecting light from the emission portion.

### Effects of Invention

As mentioned above, according to the inspection device for a container of the present invention, a holding unit which holds the upper end of the opening portion of the container is provided, and the illumination unit illuminates the inside of the protruding portion, a part of the holding unit, whereby the inspection light is delivered from the inside of the opening portion. Thereby, it is possible to collect the holding unit and the illumination to an area above the container and it is possible to deliver equable inspection light to the opening portion. Accordingly, it is possible to, while the configuration of the device, especially the configuration of the container's surrounding is downsized, deliver the inspection light suitable for the inspection to the inner side of the opening portion of the container. Thereby, it is possible to realize both of downsizing of the device and improvement of inspection accuracy.

### Brief Description of Drawings

Fig.1 is a plan view of an inspection device comprising an opening-portion inspection device for a container according to a first embodiment of the present invention.
Fig.2 is a front view of a main rotor device.
Fig.3 is an enlarged view of a sorption head.
Fig.4 is a schematic view of the opening-portion inspection device.
Fig.5 is a general view of a preform.
Fig.6 is a front view of the main rotor device of the inspection device according to a second embodiment of the present invention.
Fig.7 is an enlarged view of the sorption head of the inspection device according to the second embodiment of the present invention.
Fig.8 is a schematic view of the opening-portion inspection device of the inspection device according to a third embodiment of the present invention.

### Description of Embodiments

### (A first embodiment)

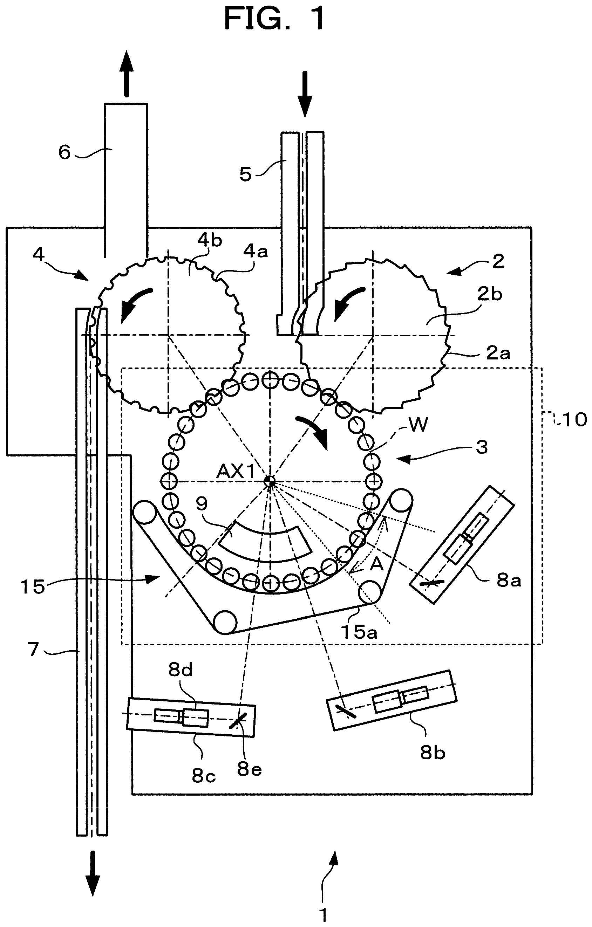

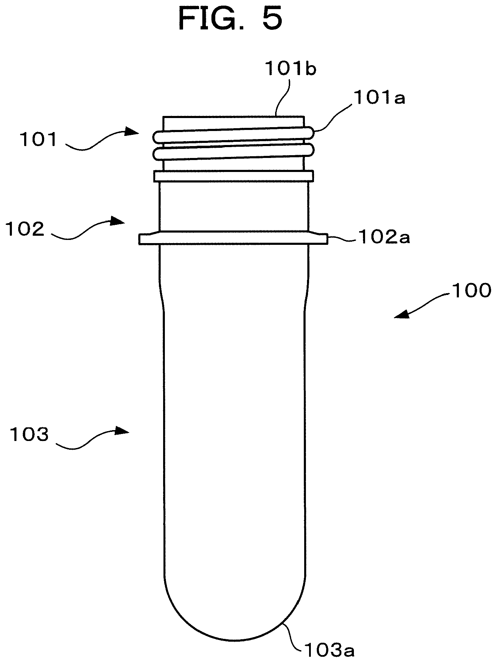

Fig.1 is a plan view of an inspection device for a container according to the first embodiment of the present invention. The inspection device 1 inspects an outer appearance of a preform 100 as a container. Fig.5 is a general view of the preform 100. The preform 100 comprises an opening portion 101, a neck portion 102, and a body portion 103. On the side of the opening portion 101, a grove portion 101a having a spiral shape is provided. Further, at the upper end of the opening portion 101, an opening-hole portion 101b is provided. At the neck portion 102, a brim portion 102a is provided. At the body portion 103, a bottom portion 103a having a spherical shape is provided.

Returning to fig.1, the inspection device 1 conveys the at least one preform 100 along with a predetermined conveyance route and inspects the outer appearance of each portion of them during the conveyance. Depending on the inspection result, while defective ones are ejected, non-defective ones are conveyed to the next step. The inspection device 1 is provided with an inlet star wheel conveying device 2, a main rotor device 3, and an outlet star wheel conveying device 4. The inlet star wheel conveying device 2 receives the preforms 100 from an inlet conveyance portion 5 supplying the preforms 100, and conveys the preforms 100 to the main rotor device 3. The inlet star wheel conveying device 2 is provided with a star wheel 2b having a plurality of pockets 2a placed in equal intervals along an outer circumference of the star wheel 2b. Similarly, the outlet star wheel conveying device 4 is also provided with a star wheel 4b having a plurality of pockets 4a placed in equal intervals along an outer circumference of the star wheel 4b. The outlet star wheel conveying device 4 conveys defective preforms 100 to a defective ejecting portion 6, and conveys remaining non-defective preforms 100 to an outlet conveyance portion 7. Further, the inlet star wheel conveying device 2 and the outlet star wheel conveying device 4 may be configured by well-known technology.

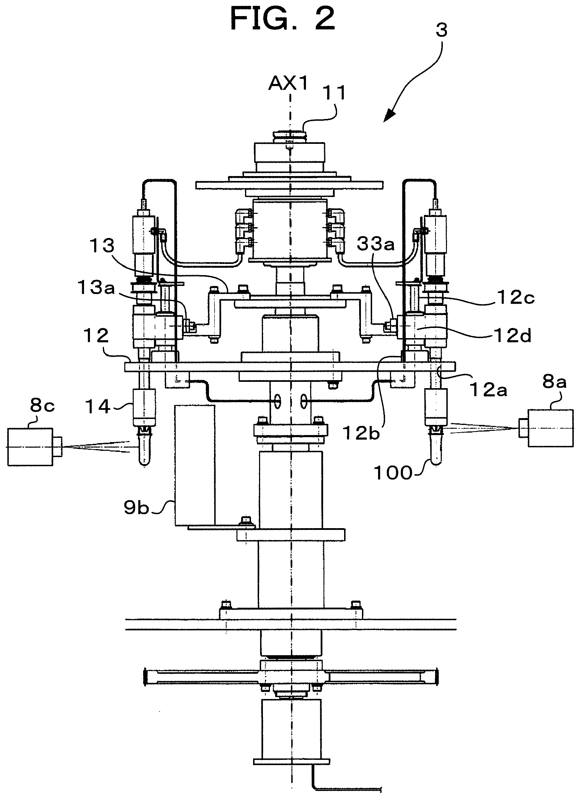

Fig.2 is a front view of the main rotor device 3. The main rotor device 3 comprises: a rotary shaft 11 provided along an axial line AX1; a first disc 12 as a conveyance unit rotating around the axial line Ax1; a second disc 13 fixed so as not to rotate; a plurality of sorption heads 14 placed in equal intervals along an outer circumference of the first disc 12; and a rotary-drive device 15 as a rotary-drive unit for making the sorption heads 14 rotate. The rotary shaft 11 is provided so as to be rotatable. The first disc 12 rotates integrally with the rotary shaft 11. The first disc 12 is provided with: a plurality of through-holes 12a opening in equal intervals along the outer circumference of the first disc 12; and up-down guiding members 12b each of which guides the sorption head 14 in a vertical direction. The sorption head 14 is inserted into each of the through-holes 12a, and revolves around the axial line AX1 accompanying the rotation of the first disc 12. The up-down guiding member 12b is provided with a guide rail 12c and a slider 12d guided along the guide rail 12c. The guide rail 12c is fixed to the first disc 12, and guides the slider 12c fixed to the sorption head 14. The second disc 13 is provided with a cam 13a along the outer circumference of the second disc 13. The rotary-drive device 15 (see fig.1) is provided with a spin belt 15a winded around plural shafts, and the spin belt 15a receives power from a drive source not illustrated, and is driven to rotate.

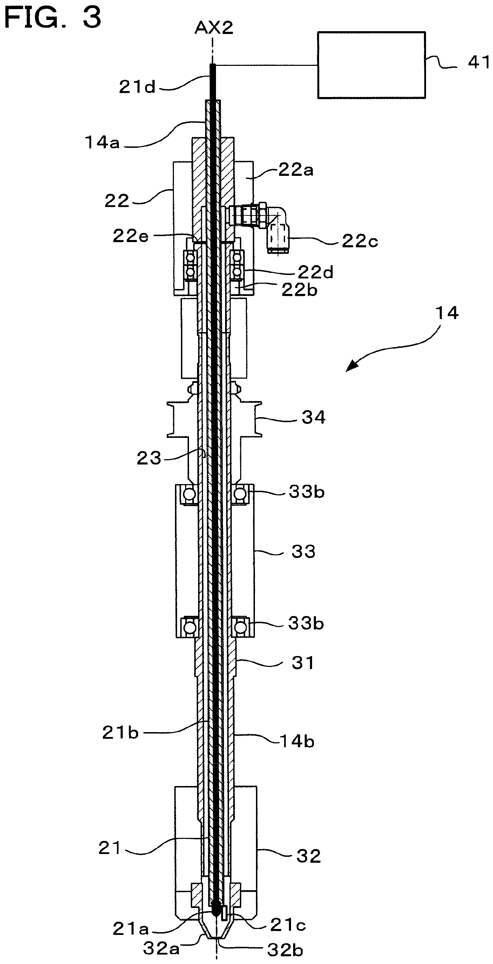

Fig.3 is an enlarged view of the sorption head 14. The sorption head 14 comprises: a first shaft 14a provided along an axial line AX2; and a second shaft 14b provided coaxially and rotatably with respect to the first shaft 14a. The first shaft 14a is provided with: an illumination device 21 as an illumination unit which illuminates the opening portion 101 of the preform 100; and a fist supporting portion 22 as a supporting unit which supports the second shaft 14b so that the second shaft 14b is allowed to rotate around the axial line AX2. The illumination device 21 is provided with: an emission portion 21a; a supporting shaft 21b supporting the emission portion 21a; and a reflection board 21c as a reflection member which reflects light emitted from the emission portion 21a. As the emission portion 21a, the LED is employed, for example. The supporting shaft 21b is formed cylindrically along the axial line AX2. In the supporting shaft 21b, a cable 21d which supplies electric power to the emission portion 21a extends. The emission portion 21a is fixed to the supporting shaft 21b. Further, the reflection board 21c which reflects inspection light of the emission portion 21a is fixed to the supporting shaft 21b. The reflection board 21c is configured as a mirror, for example. Space is provided between the first shaft 14a and the second shaft 14b whereby an air passage 23 having a ring-shaped cross-sectional surface is formed. The first supporting portion 22 is provided with a valve 22a for suctioning air in the preform 100 and a connection portion 22b which connects to the second shaft 14b. To a suction port 22c of the valve 22a, a vacuum pump as a suction unit not illustrated is connected. The air is suctioned through the suction port 22c and the air passage 23. The connection portion 22b is provided with a bearing 22d between the connection portion 22b and the valve 22a, and a rotary shaft 31 of the second shaft 14b is supported so as to be rotatable with respect to the valve 22a. A microscopic slit is provided between the upper end 22e of the connection portion 22b and the valve 22a. Thereby, while minimalizing decrease of suction power, it is prevented that the rotary shaft 31 and the valve 22a contact with each other.

The second shaft 14b is provided with: the rotary shaft 31 rotatable around the axial line AX2; a holding portion 32 as a holding unit which holds the preform 100; a second supporting portion 33 which supports the rotary shaft 31 so that the rotary shaft 31 is allowed to rotate; and a pulley 34 for applying rotary power to the rotary shaft 31. The rotary shaft 31 is provided in a cylindrical shape for forming the air passage 23. The holding portion 32 is provided with a holder 32a as a protruding portion which holds the preform 100. The holder 32a is composed of a light diffusion member which diffuses inspection light from the emission portion 21a. The light diffusion member is generally composed of an opalescent white member for erasing an outline of the emission portion 21c to take out equable light. As the light diffusion member, a transparent material, such as glass, polycarbonate resin, and polystyrene resin is used, and a diffusing agent (particles different from the transparent resin in reflective index) which diffuses light is dispersed into such a material. Well-known technology may be applied to the configuration of the light diffusion member. The holder 32a is formed in a conical shape the top of which is cut off. To the lower end of the holder 32a, a hole portion 32b is provided. When the air in the preform 100 is suctioned via the hole portion 32b, the upper end portion of the preform 100 is absorbed to the holding portion 32.

To the second supporting portion 33, the slider 12d (see fig.2) is fixed, the slider 12d being guided by the guide rail 12c of the up-down guiding member 12b. The slider 12d has a cam follower 33a (see fig.2). The cam follower 33a is guided along the cam 13a of the second disc 13 and moves in a vertical direction. Thereby, the slider 12d moves along the guide rail 12c, and the sorption head 14 moves in a vertical direction. The second supporting portion 33 is provided with bearings 33b which support the rotary shaft 31 so that the rotary shaft 31 is allowed to rotate with respect to the slider 12d. The pulley 34 receives the rotary force of the spin belt 15a. Thereby, the rotary shaft 31 turns (rotates) around the axial line AX2. The first disc 12, the first supporting portion 22, and the rotary-drive device 15 are placed above a position where the preform 100 is held by the holding portion 32.

The inspection device 1 is provided with: a plurality of imaging devices 8a to 8c each imaging the preforms 100 (when it is not necessary to discriminate them from each other, 8 is used as the representative reference sign); and an illumination device 9 which illuminates at least one preform 100 to be inspected. The imaging device 8 is provided with a camera 8d which images the preform 100, and a mirror 8e. The camera 8d images the preforms 100 via the mirror 8e. The imaging device 8a images the opening portion 101 of the preform 100. The imaging device 8b images the neck position 102. The imaging device 8c images the body portion 103. The illumination device 9 illuminates the preform 100 to be imaged and is placed at an appropriate position.

Further, the inspection device 1 is provided with a control device 41 which executes a switching control for switching between turning-on and turning-off of the emission portion 21a depending on the position of the holding portion 32 on a moving route W of the sorption head 14 and the position of the imaging device 8. For example, the control device 41 executes the switching control in such a way that when each sorption head 14 reaches a lighting region A on the moving route W, the lighting region A being determined depending on the positions of the holding portion 32 and the imaging device 8, the emission portion 21a of the sorption head 14 is turned on, and when each sorption head 14 reaches an outside of the lighting region A the emission portion 21a is turned off. The control device 41 is a computer unit comprising a microprocessor and an internal storage device such as a ROM where stored are computer programs which should be executed by the microprocessor including an operating system and a RAM which provides a work area for the microprocessor. Inside the control device 41, logical devices are realized as appropriate by combination of computer hardware and predetermined software. The main rotor device 3, the imaging device 8a, and the control device 41 are included in an opening-portion inspection device 10. The imaging device 8a corresponds to an imaging unit.

The operation of the inspection device 1 will be described. When the preforms 100 are supplied from the inlet conveyance portion 5 to the inlet star wheel conveying device 2, each of the preforms 100 is received by each of the pockets 2a and conveyed to the main rotor device 3 sequentially. At the main rotor device 3, the air in the preform 100 is suctioned through the air passage 23 between the first shaft 14a and second shaft 14b of the suction head 14, whereby the opening portion 101 of the preform 100 is held by the holding portion 32. At the main rotor device 3, while each suction head 14 turns (revolves) around the axial line AX1, the spin belt 15a of the rotary-drive device 15 rotates the pulley 34, whereby the suction head 14 turns (rotates) around the axial line AX2. When revolving, the suction head 14 moves in a vertical direction accompanying the movement of the cam follower 33a. The main rotor device 3 is configured so that each suction head 14 moves in a vertical direction when the preform 100 is supplied from the inlet star wheel conveying device 2 and when the preform 100 is given to the outlet star wheel conveying device 4. In a state that the preform 100 is being rotated, the imaging devices 8a to 8c are made to image the portions 101,102 and 103 of the preform 100 respectively, and an outer appearance inspection is executed. After the inspection, the preform 100 is supplied to the outlet star wheel conveying device 4, and then classified as either a defective or a non-defective. The non-defective preforms 100 are conveyed from the outlet conveyance portion 7 to the next step.

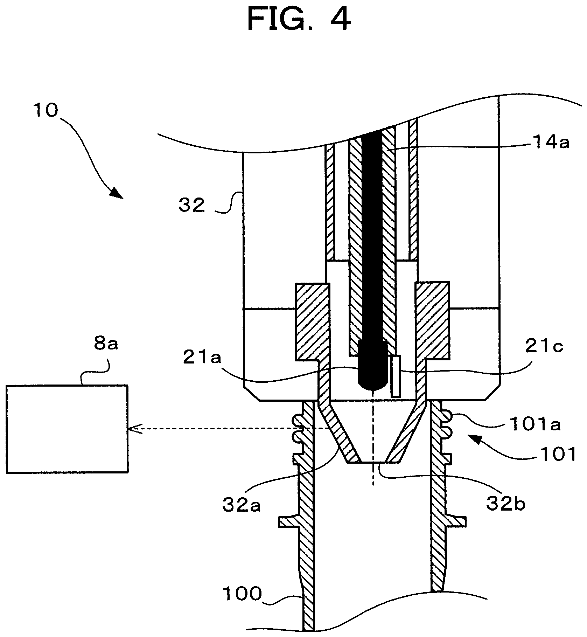

Next, the operation of the opening-portion inspection device 10 will be described. Fig.4 is a schematic view of the opening-portion inspection device 10. In the opening-portion inspection device 10, the outer appearance of the opening portion 101 of each preform 100 is inspected. The preform 100 which is being conveyed at the main rotor device 3 rotates around the axial line AX2 while revolving around the axial line AX1, whereby the opening-portion inspection device 10 is capable of inspecting the outer appearance over whole circumference of each preform 100. When the emission portion 21a provided to the first shaft 14a of the opening-portion inspection device 10 is turned on in a state that the preform 100 is held by the holding portion 32, the opening portion 101 is illuminated through the holder 32a. Since the illumination device 21 is provided along the axial line AX2, the illumination device 21 never affects the rotation of the preform 100. The holder 32a diffuses light from the emission portion 21a whereby it is possible to illuminate equably from the inner side of the opening portion 101, the side of the opening portion 101 being located between the imaging device 8a and the holder 32. Accordingly, it is possible to collect the holding portion 32 and the illumination device 21 to an area above the preform 100, and also it is possible to illuminate the opening portion 101 of the preform 100 with equable inspection light. Thereby, it is possible to illuminate the inner side of the opening portion 101 of the preform 100 with inspection light suitable for the inspection, while downsizing the configuration of the device, especially the configuration of the surrounding of the preform 100. It is possible to realize both downsizing of the device and improvement of inspection accuracy. Further, the first shaft 14a is provided with the reflection board 21c. Thereby, the positional relation of the imaging device 8a is fixed and it is possible to increase the inspection light entering the imaging device 8a.

The present invention is not limited to the above mentioned embodiment, and can be executed in various embodiments. For example, an inspection object is not limited to the preform 100, which is used as the inspection object in the above mentioned embodiment. For example, the inspection is possible even if the opening portion is the one of a transparent container such as a plastic bottle and a bottle. Further, the present invention is not limited to such an embodiment that the holding portion 32 holds the preform 100 by suctioning the air in the preform 100, which is the above mentioned embodiment. For example, the holding portion 32 may hold the preform 100 by grasping the upper end portion of the preform 100 or may hold the preform 100 by a holding member which is inserted into the opening hole portion 101b and expands radially outward. In this case, the inspection light may be delivered through the holding member.

Further, the present invention is not limited to such an embodiment that the holder 32a is formed in a conical shape the top of which is cut off, which is the above mentioned embodiment. For example, the holder 32a may be formed in a cylindrical shape or a hemispherical shape. Further, the holder 32a may be formed in a flat shape which is not inserted into the preform 100. In this case, the inside of the preform 100 is illuminated from the upper surface of the preform 100. As long as illuminating from the inside of the opening portion 101 is possible, the holder 32a can be formed in any shape as appropriate. The present invention is not limited to such an embodiment that the cross-sectional surface of the air passage 23 is ring-shaped, which is the above mentioned embodiment. The air passage 23 may be formed by a single hole or plural holes. Any shape such as a circular shape and a multangular shape may be applied to the cross-sectional shape of each hole as appropriate. In this case, the first shaft 14a may rotate accompanying the second shaft 14b. The present invention is not limited to such an embodiment that the reflection board 21c is provided to the illumination device 21, which is the above mentioned embodiment. For example, the reflection board 21c is not necessary to be provided to the illumination device 21. The present invention is not limited to such an embodiment that the illumination device 21 has the cable 21d extending to the emission portion 21a, which is the above mentioned embodiment. For example, the following embodiment may be applied. Power is supplied to the emission portion 21a in a non-contact manner using well-known technology, and the illumination device 21 is configured so as to rotate with the holding portion 32. In this case, the illumination device 21 may be fixed to the holding portion 32.

In the above mentioned embodiment, the control device 41 may turn on the emission portion 21a in a case where the holding portion 32 is on a predetermined route corresponding to the imaging device 8 within the moving route W, and may turn off the emission portion 21a in a case where the holding portion 21 is in an outside of the predetermined route. Alternatively, the control device 41 may always maintain the emission portion 21a in a lighting state. In this case, a light blocking member may be placed at the surrounding of the imaging device 8 so as to block the light from the holding positions 32 which are not the inspection objects. The present invention is not limited to such an embodiment that the containers are conveyed using the main rotor device 3, which is the above mentioned embodiment. Various kinds of conveyance configurations such as the straight conveyance can be applied to the present invention.

### (A second embodiment)

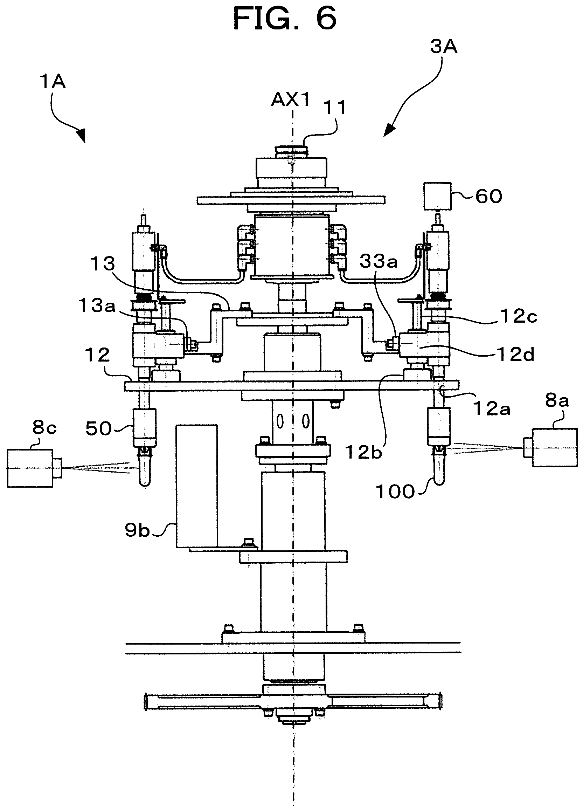

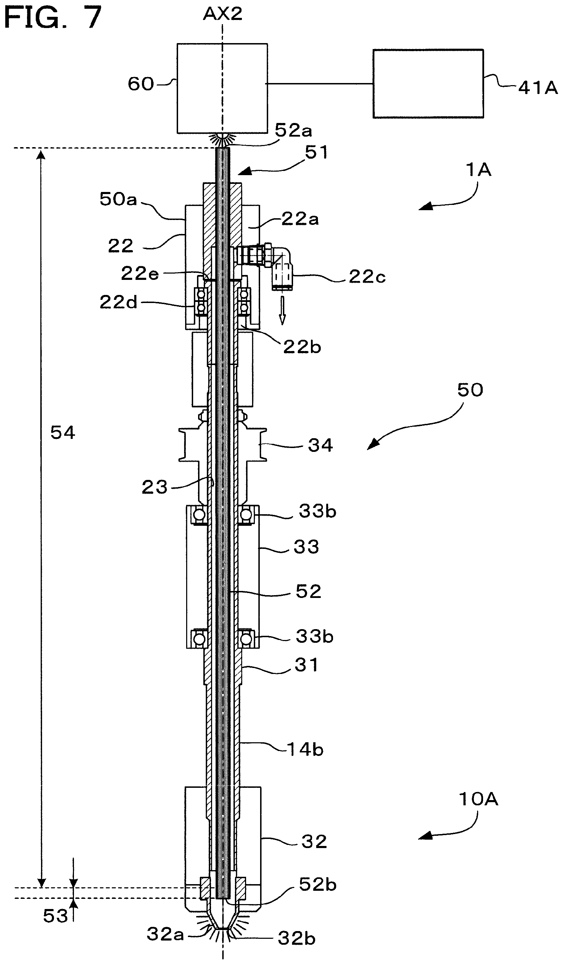

The present invention is not limited to such an embodiment that the illumination device 21 has a configuration that the cable 21d extends to the emission portion 21a, which is the above mentioned embodiment. For example, the illumination device may be configured so as to illuminate the inside of the holder 32a through an acrylic member from a light source. Fig.6 is a front view of a main rotor device 3A of an inspection device 1A of the second embodiment. Fig.7 is an enlarged view of a sorption head 50 of the inspection device 1A of the second embodiment. In the second embodiment, since the elements other than the sorption head 50 are similar to the elements of the first embodiment, the same reference signs are assigned to such elements respectively and the explanations of them will be omitted. The sorption head 50 comprises: a first shaft 50a provided along the axial line AX2; and the second shaft 14b provided coaxially with the first shaft 50a and provided so as to be rotatable with respect to the first shaft 50a. The first shaft 50a is provided with: an acrylic member 52 which leads the light from a light source 60 to illuminate the inside of the holder 32a; and the first supporting portion 22. Since the second shaft 14b and the first supporting portion 22 are configured similarly to the ones in the first embodiment respectively, the same reference signs are assigned to them, and the explanation of them will be omitted.

The light source 60 is provided in a fixed manner above the first disc 12, more specifically, above the first supporting portion 22, so as not to rotate accompanying the rotation of the first disc 12. The light source 60 is placed in the lighting region A on the moving route W. A single light source 60 or plural ones may be placed depending on the imaging position of the imaging device 8a. For example, the LED or the LD can be employed as the light source 60. In the second embodiment, the light source 60 is configured to maintain a lighting state during an inspection period. The acrylic member 52 is a rod-shaped optical member which is made of acrylic resin. The acrylic member 52 is provided along the axial line AX2, and the upper end side thereof is supported by the first supporting portion 22. An upper end portion 52a, the end portion located on the light source 60 side of the acrylic member 52 receives light from the light source 60. On the other hand, the lower end portion 52b, the end portion located on the holder 32a side of the acrylic member 52 emits light because of the light traveled from the upper end portion 52a. The cross-sectional surface of the lower end portion 52b is cut so as to be in parallel with a perpendicular direction with respect to the axial line AX2. The light emitted from the lower end portion 52b of the acrylic member 52 illuminates as the inspection light, the opening portion 101 of the preform 100 through the holder 32a.

In the second embodiment, the illumination device 51 as the illumination unit comprises the light source 60 and the acrylic member 52 as a leading light unit. In this case, the lower end portion 52b of the acrylic member 52 corresponds to an emission portion 53 which illuminates the inside of the holder 32a (the protruding portion), and a remaining part of the acrylic member 52 except the lower end portion 52b corresponds to a leading light portion 54 which leads the light from the light source 60 to the emission portion 53. As mentioned above, the emission portion 53 illuminates the inside of the holder 32a (the protruding portion) using the light having passed through the light leading portion 54. The emission portion 53 and leading light portion 54 of the acrylic member 52 shown in fig.7 is just one example. The allocation of the emission portion 53 and the leading light portion 54 in the acrylic member 52 is changed depending on the function of each of the portions 53 and 54.

In the second embodiment, instead of the acrylic member 52, the light fiber may be provided as the leading light unit, for example. In this case, the lower end portion, which is an end portion located on a holder 32a side of the light fiber, corresponds to the emission portion 53, and a remaining part of the light fiber except the lower end portion corresponds to the leading light portion 54. The present invention is not limited to such an embodiment that the leading light portion 54 and the emission portion 53 are provided to the same member, which is the second embodiment. For example, the acrylic member may be used only for the leading light portion 54, and another optical member composed of a material having an optical diffuseness may be used for the emission portion 53 which delivers the light from the leading light portion 54 to the holder 32a. The leading light portion 54 and the emission portion 53 may be configured in a unified manner, and an optical diffuseness may be given to the lower end portion corresponding to the emission portion 53. The leading light portion 54 is not limited to the acrylic member or the light fiber, and may be configured by an optical member having a high transmissivity. Without providing something, the leading light portion 54 may be configured in such a way that the light is allowed to pass through the space in the rotary shaft 31 of the second shaft 14b. On the other hand, the emission portion 53 may be configured by the same material as the leading light portion 54, or by a material different from the leading light portion 54. As long as the emission portion 53 emits light inside the holder 32a, it is possible to deliver the inspection light through the holder 32a to the opening portion 101 of the preform 100. Further, by placing the leading light portion 54, the flexibility of placement of the light source 60 is improved. The light source 60 is not necessary to be placed above the first supporting portion 22, may be placed at an appropriate position by using the light fiber.

### (A third embodiment)

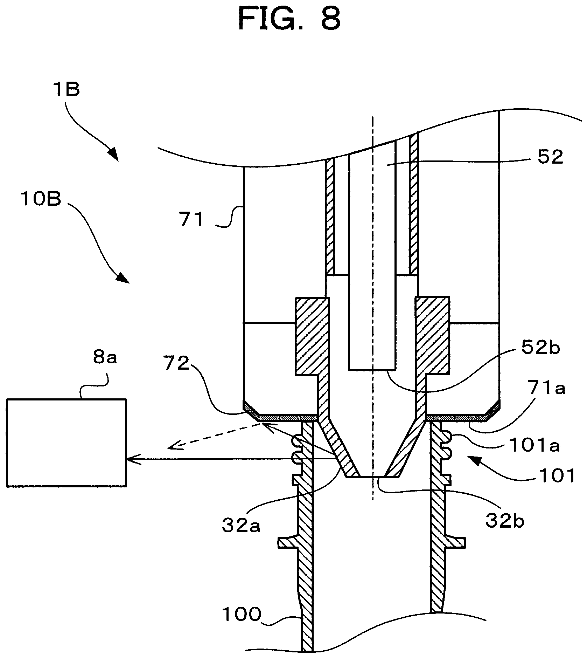

In the first and second embodiments, a surface finishing for preventing reflection of the inspection light is applied on a flat holding surface which holds the preform 100 of the holding portion 32. Fig.8 is a general view of an opening-portion inspection device 10B of an inspection device 1B according to the third embodiment. In the third embodiment, to the elements similar to the elements in the first and second embodiments, the same reference signs are assigned and the explanations of them will be omitted.

On a holding surface 71a of a holding portion 71 of a sorption head 70 in the opening-portion inspection device 10B, a surface finishing for absorbing the inspection light is applied. As such a surface finishing, for example, there are the metal plating, the electrolytic polishing, and the like. In a case where blue inspection light is used for inspecting the opening portion 101 of the preform 100, the colored chromate processing for making it harder to reflect the blue inspection light is applied on the holding surface 71a.

In the holding portion 71, the surface finishing is applied on at least a part of a reflection region 72 where the inspection light traveling in a direction diverging from a direction toward the imaging device 8a is reflected and the reflected light can travel toward the imaging device 8a. The reflection region 72 includes the holding surface 71a. The surface finishing may be applied on all over the reflection region 72, or may be applied only on the holding surface 71a (the flat surface holding the preform 100 shown in fig.8). The reflection region 72 may be determined as appropriate depending on the shape of the holding portion 71. If there is a region other than the holding portion 71, where the inspection light is reflected and the reflected light can travel toward the imaging device 8a, the surface finishing may be also applied on the region.

In the third embodiment, when light travels from the light source 60 and the lower end portion 52b of the acrylic member 52 emits light, the inspection light is delivered to the opening portion 101 through the holder 32a. By applying the surface finishing on the holding surface 71a, the inspection light is absorbed on the holding surface 71a, whereby it is possible to prevent the reflection. Accordingly, the reflection of the inspection light on the holding surface 71a is reduced whereby it is possible to suppress negative effects on the imaging device 8a, so that it is prevented to deteriorate the inspection accuracy. The third embodiment is described as an embodiment where the acrylic member 52 is used as the illumination unit (the second embodiment). However, the present invention is not limited to this embodiment, and the emission portion 21a may be applied as with the first embodiment.

In the second and third embodiments, the light source 60 is configured to always maintain the lighting state during the inspection period. However, a control device 41A which executes a switching control for switching between turning-on and turning-off may be connected. In this case, the control device 41A executes the switching control in such a way that at the moment when the sorption head 50 reaches the irradiation position of the light source 60, the control device 41A turns on the light source 60 and at the moment when the sorption head 50 is in the outside of the irradiation position, the control device 41A turns off the light source 60. Further, as with the above embodiment, a reflection board may be provided in a fixed manner inside the holder 32a. In the second and third embodiments, the leading light unit (the acrylic member 52) of the illumination device 51 is supported by the first supporting portion 22 so as not to rotate accompanying the rotation of the holding portion 32. In this case, the leading light unit (the acrylic member 52) may be fixed to the holding portion 32. In the second and third embodiments, the cross-sectional surface of the lower end portion 52b is cut so as to be in parallel with a perpendicular direction with respect to the axial line AX2. However, the lower end portion 52b may be formed in another shape. For example, the cross-sectional surface of the lower end portion 52b may be cut on a slant with respect to the axial line AX2. The lower end portion 52b may be cut in a "v" shape or may be cut in a conic shape having a convex center. It is possible to make a change as appropriate.

## Claims

1. An inspection device for inspecting at least an opening portion (101) of a container (100), comprising:
a holding unit (32) having a protruding portion (32a) which is configured by a light diffusion member and which is configured for being inserted into an inside of the opening portion (101), and which is configured for holding an upper end portion of the opening portion (101);
an illumination unit (21, 51) having an emission portion (21a, 53) for illuminating an inside of the protruding portion, and for delivering an inspection light to the opening portion through the protruding portion;
a supporting unit (22) which is placed above a position where the container is held by the holding unit and supports the holding unit so that the holding unit is allowed to rotate around an axial line (AX2) of the holding unit, and further supports the illumination unit so that the emission portion does not rotate accompanying rotation of the holding unit;
a rotary-drive unit (15) which is placed above a position where the container is held by the holding unit and is configured to drive the holding unit so that the holding unit is allowed to rotate around the axial line (AX2); and
an imaging unit (8a) configured to image the opening portion illuminated by the emission portion when the holding unit rotates and the emission portion does not rotate accompanying the rotation of the holding unit.

2. The inspection device according to claim 1, wherein the supporting unit (22) is connected with a suction unit which, in use, suctions air, and the suction unit is configured for suctioning air in the container through a hole portion (32b) and an air passage provided to the protruding portion (32a) whereby the holding unit (32) holds the container (100).

3. The inspection device according to any one of claims 1 to 2, further comprising:
a conveyance unit (12) which is placed above a position where the container is held by the holding unit (32), and which is configured for conveying the holding unit (32) along a predetermined conveyance route; wherein
the imaging unit (8a) is configured to image the opening portion (101) in a case where the holding unit is at an inspection position on the conveyance route.

4. The inspection device according to claim 3, further comprising an illumination control unit which is configured to execute a switching control to switch between turning-on and turning-off of the emission portion (21a, 53) depending on a position of the imaging unit (8a) and a position of the holding unit (32) on the conveyance route.

5. The inspection device according to claim 3 or 4, wherein
the holding unit has a reflection region (72) where the inspection light traveling in a direction diverging from a direction toward the imaging unit (8a) is reflected and the inspection light reflected travels toward the imaging unit, and
a surface finishing for absorbing the inspection light is applied on at least a part of the reflection region.

6. The inspection device according to claim 5, wherein
the reflection region (72) includes a holding surface (71a) which is configured for holding the upper end portion of the opening portion (101).

7. The inspection device according to any one of claims 1 to 6, wherein
the illumination unit (51) comprises:
a light source (60); and
a leading light unit (52) including a leading light portion (54) and the emission portion (53), the leading light portion being configured for leading light from the light source to the emission portion, and
the emission portion being configured for illuminating the inside of the protruding portion (32a) using light having passed though the leading light portion.

8. The inspection device according to any one of claims 3 to 6, wherein
the illumination unit (51) comprises:
a light source (60) placed in a fixed manner above the conveyance unit (52); and
a leading light unit (52) including a leading light portion (54) and the emission portion (53), the leading light portion being configured for leading light from the light source to the emission portion, and
the emission portion being configured for illuminating the inside of the protruding portion (32a) using light having passed through the leading light portion.

9. The inspection device according to claim 7 or 8, wherein
the leading light unit (52) is configured by a rod-shaped optical member,
an end portion being located on a side of the protruding portion (32a) of the optical member functions as the emission portion (53), and
a remaining portion of the optical member except the end portion functions as the leading light portion (54).

10. The inspection device according to claim 9, wherein
the optical member is composed of acrylic resin.

11. The inspection device according to any one of claims 1 to 10, wherein the illumination unit (21, 51) is provided with a reflection member (21c) for reflecting light emitted from the emission portion.

## Patentansprüche

1. Inspektionsvorrichtung zur Inspektion mindestens eines Öffnungsteils (101) eines Behälters (100), umfassend:
eine Halterungseinheit (32) mit einem vorstehenden Teil (32a), der von einem Lichtstreuungsbauteil konfiguriert ist und der konfiguriert ist, eingelegt zu werden
in ein Inneres des Öffnungsteils (101), und der konfiguriert ist zum Halten eines oberen Endstücks des Öffnungsteils (101);
eine Beleuchtungseinheit (21, 51) mit einem Abstrahlungsteil (21a, 53) zum Beleuchten eines Inneren des vorstehenden Teils, und zum Bereitstellen eines Inspektionslichts an den Öffnungsteil durch den vorstehenden Teil;
eine Trägereinheit (22), die über einer Position platziert ist, wobei der Behälter von der Halterungseinheit gehalten wird und die Halterungseinheit trägt, sodass die Halterungseinheit in der Lage ist, sich um eine Axiallinie (AX2) der Halterungseinheit zu drehen, und weiter die Beleuchtungseinheit trägt, sodass sich der Abstrahlungsteil nicht gemeinsam mit der Halterungseinheit dreht;
eine Drehantriebseinheit (15), die oberhalb einer Position platziert ist, wobei der Behälter von der Halterungseinheit gehalten wird und konfiguriert ist, zum Antreiben der Halterungseinheit, sodass die Halterungseinheit in der Lage ist, sich um die Axiallinie (AX2) zu drehen; und
eine Bildgebungseinheit (8a), konfiguriert zur Abbildung des Öffnungsteils, beleuchtet von dem Abstrahlungsteil, wenn sich die Halterungseinheit dreht und sich der Abstrahlungsteil nicht gemeinsam mit der Drehung der Halterungseinheit dreht.

2. Inspektionsvorrichtung nach Anspruch 1, wobei
die Trägereinheit (22) mit einer Absaugeinheit verbunden ist, die im Betrieb Luft ansaugt, und die Absaugeinheit konfiguriert ist zum Absaugen von Luft in dem Behälter, durch ein Öffnungsteil (32b) und einen Luftdurchlass, der dem vorstehenden Teil (32a) bereitgestellt ist, wodurch die Halterungseinheit (32) den Behälter (100) hält.

3. Inspektionsvorrichtung nach einem der Ansprüche 1 bis 2, weiter umfassend:
eine Transporteinheit (12), die oberhalb einer Position platziert ist, wobei der Behälter von der Halterungseinheit (32) gehalten wird, und die konfiguriert ist zum Transport der Halterungseinheit (32) entlang einer vorbestimmten Transportstrecke; wobei
die Bildgebungseinheit (8a) zum Abbilden des Öffnungsteils (101) konfiguriert ist, in einem Fall, wenn die Halterungseinheit in einer Inspektionsposition auf der Transportstrecke ist.

4. Inspektionsvorrichtung nach Anspruch 3, weiter umfassend eine Beleuchtungssteuerungseinheit, die zum Ausführen einer Schaltungssteuerung zum Wählen zwischen Einschalten und Ausschalten des Abstrahlungsteils (21a, 53) konfiguriert ist, abhängig von einer Position der Bildgebungseinheit (8a) und einer Position der Halterungseinheit (32) auf der Transportstrecke.

5. Inspektionsvorrichtung nach Anspruch 3 oder 4, wobei die Halterungseinheit einen Reflektionsbereich (72) hat, wobei das Inspektionslicht verlaufend in eine Richtung, abweichend von einer Richtung zu der Bildgebungseinheit (8a) reflektiert wird und das reflektierte Inspektionslicht zu der Bildgebungseinheit verläuft, und eine Oberflächenbehandlung zum Absorbieren des Inspektionslichts auf mindestens einem Teil des Reflektionsbereichs aufgebracht ist.

6. Inspektionsvorrichtung nach Anspruch 5, wobei der Reflektionsbereich (72) eine Halterungsoberfläche (71a) aufweist, die zum Halten des oberen Endstücks des Öffnungsteils (101) konfiguriert ist.

7. Inspektionsvorrichtung nach einem der Ansprüche 1 bis 6, wobei die Beleuchtungseinheit (51) umfasst:
eine Lichtquelle (60); und
eine Hauptlichteinheit (52), aufweisend einen Hauptlichtteil (54) und den Abstrahlungsteil (53), wobei der Hauptlichtteil zum Leiten von Licht von der Lichtquelle zu dem Abstrahlungsteil konfiguriert ist, und
wobei der Abstrahlungsteil zum Beleuchten des Inneren des vorstehenden Teils (32a) mittels Licht, das den Hauptlichtteil durchgelaufen hat, konfiguriert ist.

8. Inspektionsvorrichtung nach einem der Ansprüche 3 bis 6, wobei die Beleuchtungseinheit (51) umfasst:
eine Lichtquelle (60), fest oberhalb der Transporteinheit (52) platziert; und
eine Hauptlichteinheit (52), aufweisend einen Hauptlichtteil (54) und den Abstrahlungsteil (53), wobei der Hauptlichtteil zum Leiten von Licht von der Lichtquelle zu dem Abstrahlungsteil konfiguriert ist, und
wobei der Abstrahlungsteil zum Beleuchten des Inneren des vorstehenden Teils (32a) mittels Licht, das den Hauptlichtteil durchgelaufen hat, konfiguriert ist.

9. Inspektionsvorrichtung nach Anspruch 7 oder 8, wobei die Hauptlichteinheit (52) durch ein stangenförmiges optisches Bauteil konfiguriert ist,
wobei ein Endstück, das sich auf einer Seite des vorstehenden Teils (32a) des optischen Bauteils befindet, als der Abstrahlungsteil (53) fungiert, und
ein verbleibender Teil des optischen Bauteils, außer dem Endstück, als der Hauptlichtteil (54) fungiert.

10. Inspektionsvorrichtung nach Anspruch 9, wobei das optische Bauteil aus Acrylharz besteht.

11. Inspektionsvorrichtung nach einem der Ansprüche 1 bis 10, wobei die Beleuchtungseinheit (21, 51) mit einem Reflektionsbauteil (21c) zum Reflektieren von Licht, abgestrahlt von dem Abstrahlungsteil, ausgestattet ist.

## Revendications

1. Dispositif d'inspection pour inspecter au moins une portion formant ouverture (101) d'un récipient (100), comprenant :
une unité de maintien (32) ayant une portion saillante (32a) qui est configurée par un élément de diffusion de lumière et qui est configurée pour être insérée dans un intérieur de la portion formant ouverture (101), et qui est configurée pour maintenir une portion d'extrémité supérieure de la portion formant ouverture (101) ;
une unité d'éclairage (21, 51) ayant une portion d'émission (21a, 53) pour éclairer un intérieur de la portion saillante, et pour délivrer une lumière d'inspection à la portion formant ouverture à travers la portion saillante ;
une unité de support (22) qui est placée au-dessus d'une position où le récipient est maintenu par l'unité de maintien et qui supporte l'unité de maintien de sorte que l'unité de maintien est autorisée à tourner autour d'une ligne axiale (AX2) de l'unité de maintien, et qui supporte en outre l'unité d'éclairage de sorte que la portion d'émission ne tourne pas en accompagnant une rotation de l'unité de maintien ;
une unité d'entraînement en rotation (15) qui est placée au-dessus d'une position où le récipient est maintenu par l'unité de maintien et qui est configurée pour entraîner l'unité de maintien de sorte que l'unité de maintien est autorisée à tourner autour de la ligne axiale (AX2) ; et
une unité d'imagerie (8a) configurée pour prendre une image de la portion formant ouverture éclairée par la portion d'émission lorsque l'unité de maintien tourne et la portion d'émission ne tourne pas en accompagnant la rotation de l'unité de maintien.

2. Dispositif d'inspection selon la revendication 1, dans lequel
l'unité de support (22) est reliée à une unité d'aspiration qui, en fonctionnement, aspire de l'air, et
l'unité d'aspiration est configurée pour aspirer de l'air dans le récipient à travers une portion formant trou (32b) et un passage d'air prévu sur la portion saillante (32a) de sorte que l'unité de maintien (32) maintient le récipient (100).

3. Dispositif d'inspection selon l'une quelconque des revendications 1 à 2, comprenant en outre :
une unité de transport (12) qui est placée au-dessus d'une position où le récipient est maintenu par l'unité de maintien (32), et qui est configurée pour transporter l'unité de maintien (32) le long d'un itinéraire de transport prédéterminé ; dans lequel
l'unité d'imagerie (8a) est configurée pour prendre une image de la portion formant ouverture (101) dans un cas où l'unité de maintien est au niveau d'une position d'inspection sur l'itinéraire de transport.

4. Dispositif d'inspection selon la revendication 3, comprenant en outre une unité de commande d'éclairage qui est configurée pour exécuter une commande de commutation pour commuter entre l'allumage et l'extinction de la portion d'émission (21a, 53) en fonction d'une position de l'unité d'imagerie (8a) et d'une position de l'unité de maintien (32) sur l'itinéraire de transport.

5. Dispositif d'inspection selon la revendication 3 ou 4, dans lequel
l'unité de maintien possède une région de réflexion (72) où la lumière d'inspection voyageant dans un sens divergeant à partir d'un sens vers l'unité d'imagerie (8a) est réfléchie et la lumière d'inspection réfléchie voyage vers l'unité d'imagerie, et
une finition de surface pour absorber la lumière d'inspection est appliquée sur au moins une partie de la région de réflexion.

6. Dispositif d'inspection selon la revendication 5, dans lequel
la région de réflexion (72) inclut une surface de maintien (71a) qui est configurée pour maintenir la portion d'extrémité supérieure de la portion formant ouverture (101).

7. Dispositif d'inspection selon l'une quelconque des revendications précédentes 1 à 6, dans lequel
l'unité d'éclairage (51) comprend :
une source de lumière (60) ; et
une unité de conduite de lumière (52) incluant une portion de conduite de lumière (54) et la portion d'émission (53), la portion de conduite de lumière étant configurée pour conduire la lumière depuis la source de lumière jusqu'à la portion d'émission, et
la portion d'émission étant configurée pour éclairer l'intérieur de la portion saillante (32a) en utilisant la lumière qui est passée à travers la portion de conduite de lumière.

8. Dispositif d'inspection selon l'une quelconque des revendications 3 à 6, dans lequel
l'unité d'éclairage (51) comprend :
une source de lumière (60) placée d'une manière fixe au-dessus de l'unité de transport (52) ; et
une unité de conduite de lumière (52) incluant une portion de conduite de lumière (54) et la portion d'émission (53), la portion de conduite de lumière étant configurée pour conduire la lumière depuis la source de lumière jusqu'à la portion d'émission, et
la portion d'émission étant configurée pour éclairer l'intérieur de la portion saillante (32a) en utilisant la lumière qui est passée à travers la portion de conduite de lumière.

9. Dispositif d'inspection selon la revendication 7 ou 8, dans lequel
l'unité de conduite de lumière (52) est configurée par un élément optique en forme de tige,
une portion d'extrémité située sur un côté de la portion saillante (32a) de l'élément optique fonctionne en tant que portion d'émission (53), et
une portion restante de l'élément optique à l'exception de la portion d'extrémité fonctionne en tant que portion de conduite de lumière (54).

10. Dispositif d'inspection selon la revendication 9, dans lequel l'élément optique est composé de résine acrylique.

11. Dispositif d'inspection selon l'une quelconque des revendications 1 à 10, dans lequel l'unité d'éclairage (21, 51) est munie d'un élément de réflexion (21c) pour réfléchir la lumière émise à partir de la portion d'émission.
